Europäisches Patentamt

European Patent Office

Office européen des brevets

(11) Veröffentlichungsnummer: **0 171 664**

**A1**

## (12) EUROPÄISCHE PATENTANMELDUNG

(21) Anmeldenummer: **85109216.3**

(22) Anmeldetag: **23.07.85**

(51) Int. Cl.⁴: **G 02 B 6/38**

(30) Priorität: **03.08.84 DE 3428647**

(43) Veröffentlichungstag der Anmeldung:
**19.02.86 Patentblatt 86/8**

(84) Benannte Vertragsstaaten:
**AT BE CH DE LI LU NL**

(71) Anmelder: **Licentia Patent-Verwaltungs-GmbH**
**Theodor-Stern-Kai 1**
**D-6000 Frankfurt/Main 70(DE)**

(72) Erfinder: **Hillerich, Bernd, Dipl.-Phys.**
**Burgunderweg 9**
**D-7900 Ulm(DE)**

(72) Erfinder: **Weidel, Edgar, Dipl.-Phys.**
**Hudlerstrasse 25**
**D-7913 Senden(DE)**

(74) Vertreter: **Schulze, Harald Rudolf, Dipl.-Ing. et al,**
**Licentia Patent-Verwaltungs-GmbH Theodor-Stern-Kai 1**
**D-6000 Frankfurt/Main 70(DE)**

(54) **Koppelanordnung für Lichtwellenleiter.**

(57) Die Erfindung betrifft eine Koppelanordnung für Lichtwellenleiter (L1, L2) insbesondere für Monomode-
Lichtwellenleiter, bei welcher die mit ihren Stirnflächen zu
koppelnden Lichtwellenleiter in eine 60°-V-Nut (5) gelegt
werden, deren Flanken mit einem leicht deformierbaren
Material (10) beschichtet sind. Auf die Lichtwellenleiter wird
nun ein Oberteil (3) gepreßt, das ebenfalls beschichtet ist.
Dadurch erfolgt in vorteilhafter Weise eine kostengünstig
durchführbare Zentrierung der Lichtwellenleiter.

FIG. 1

Licentia Patent-Verwaltungs-GmbH
Theodor-Stern-Kai 1

D-6000 Frankfurt 70

PTL-UL/Ja/lh
UL 84/84

Aktz.:
P 34 28 647.0

Beschreibung

## Koppelanordnung für Lichtwellenleiter

Die Erfindung betrifft eine Koppelanordnung für Lichtwellenleiter nach dem Oberbegriff des Patentanspruchs 1.

Die Erfindung betrifft insbesondere eine kostengünstig
herstellbare Koppelanordnung, die zum Koppeln von Monomode-Lichtwellenleitern geeignet ist. Solche Lichtwellenleiter bestehen aus dotiertem sowie undotiertem Quarzglas und
besitzen einen lichtführenden sogenannten Kern mit einem
Durchmesser von ungefähr 10 µm. Dieser Kern ist umgeben
von einem sogenannten Mantel, der einen Außendurchmesser
von ungefähr 120 µm besitzt. Es ist sehr schwierig, diesen
Außendurchmesser mit sehr langen Toleranzen in der Massenherstellung einzuhalten. In der Praxis treten Durchmesser-

...

schwankungen von $\pm3$ µm auf.

Zum optischen verlustarmen Koppeln zweier solcher Lichtwellenleiter ist es erforderlich, deren Stirnflächen zueinander derart zu justieren, daß die Längsachsen beider Lichtwellenleiter fluchten, das heißt, an der Koppelstelle sollten Knicke und/oder Versetzungen der Längsachsen zueinander vermieden werden. Aus der Zeitschrift Electronics Letters, Band 13, Nr. 22, Seiten 673-674 ist es bekannt, die zu koppelnden Lichtwellenleiter in eine grabenförmige Vertiefung mit einem v-förmigen Querschnitt, eine sogenannte V-Nut, zu legen und zu befestigen, z.B. durch Kleben. Eine derartige Koppelanordnung hat den Nachteil, daß bereits eine geringfügige Differenz der Außendurchmesser der zu koppelnden Lichtwellenleiter zu einem erheblichen Versatz der Längsachsen führt. Bei einer beispielhaft gewählten 90°-V-Nut führt bei den zu koppelnden Lichtwellenleitern ein Durchmesserunterschied von 4 µm (3 % des Außendurchmessers) zu einem Versatz von ungefähr 2,8 µm. Das entspricht ungefähr einem Viertel des Kerndurchmessers. Eine solche Kopplung von Lichtwellenleitern ist unbrauchbar, da zu hohe optische Koppelverluste auftreten.

Der Erfindung liegt daher die Aufgabe zugrunde, eine gattungsgemäße Koppelanordnung anzugeben, die in kostengünstiger Weise eine verlustarme Kopplung ermöglicht, insbesondere von Monomode-Lichtwellenleitern.

Diese Aufgabe wird gelöst durch die im kennzeichnenden Teil des Patentanspruchs 1 angegebenen Merkmale. Vorteilhafte Ausgestaltungen und Weiterbildungen sind den Unteransprüchen entnehmbar.

...

Ein Vorteil der Erfindung besteht darin, daß kostenungünstige Vorrichtungen, z.B. ein Mikromanipulator mit Justiermikroskop, nicht benötigt werden und daß die Kopplung der Lichtwellenleiter auch unter ungünstigen Bedingungen durchführbar ist, z.B. in einem Kabelschacht.

Die Erfindung wird im folgenden anhand eines Ausführungsbeispiels näher erläutert unter Bezugnahme auf eine schematische Zeichnung.

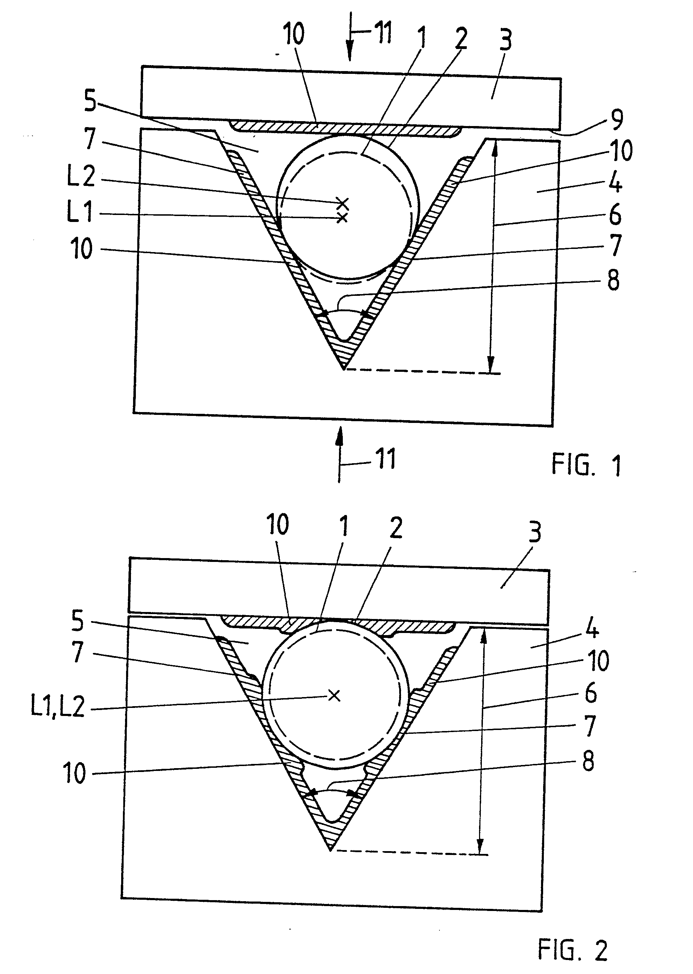

Die Figuren 1 und 2 zeigen einen Querschnitt durch die erfindungsgemäße Koppelanordnung ungefähr am Ort der Koppelstelle der Lichtwellenleiter. Die Figuren dienen außerdem zur Erläuterung der Funktionsweise der Koppelanordnung.

FIG. 1 zeigt das Unterteil 4, z.B. einen quaderförmigen Körper aus Messing mit einer Länge (senkrecht zur Zeichenebene) von ungefähr 10 mm sowie einem ungefähr quadratischen Querschnitt mit einer Seitenlänge von ungefähr 3 mm. In eine der Seitenfläche ist eine grabenförmige Vertiefung 5 angebracht, z.B. durch Prägen oder Stoßen. Die Vertiefung 5 besitzt einen v-förmigen Querschnitt mit einem Winkel 8 von im wesentlichen 60° (Altgrad). Die Tiefe 6 entspricht im wesentlichen dem 1,5 fachen des größten Außendurchmessers der zu koppelnden Lichtwellenleiter 1, 2. Besitzen beispielsweise die Lichtwellenleiter 1 bzw. 2 Außendurchmesser von 116 µm bzw. 120 µm, so beträgt die Tiefe 6 ungefähr 180 µm. Bei der Vertiefung 5 sind die Seitenflächen 7 mit einem vorzugsweise bei Raumtemperatur leicht verformbarem Material 10 überzogen, z.B. Indium oder PVC. Dabei ist die gewählte Schichtdicke gleich oder

...

größer als die Differenz der Radien der Lichtwellenleiter 1, 2. In dem Ausführungsbeispiel beträgt die Schichtdicke ungefähr 3 µm.

An den Enden der zu koppelnden Lichtwellenleitern 1, 2 werden zunächst optisch geeignete Stirnflächen erzeugt, z.B. durch Ritzen und Brechen. Die Lichtwellenleiter 1 bzw. 2 mit den beispielhaft gewählten Außendurchmessern 116 µm bzw. 120 µm werden nun derart in die Vertiefung 5 gelegt, daß sich die Stirnflächen berühren. Zur Vermeidung optischer Koppelverluste ist es zweckmäßig, die Stirnflächen zusätzlich mit einem optischen Medium zu benetzen, z.B. einem Immersionsöl und/oder einem optischen Kitt, dessen Brechungsindex an denjenigen der Lichtwellenleiter 1, 2 angepaßt ist. Gemäß FIG. 1 entsteht der an sich unerwünschte Versatz der Längsachsen L1, L2 der Lichtwellenleiter 1, 2. Auf die Lichtwellenleiter 1, 2 wird nun das Oberteil 3 gelegt, das auf seiner dem Unterteil 4 zugewandten Oberfläche 9 ebenfalls mit demselben Material 10 beschichtet ist mit derselben beispielhaft gewählten Schichtdicke von 3 µm. Werden nun Oberteil 3 und Unterteil 4 in Richtung der Pfeile 11 zusammengepreßt, so drücken sich die Lichtwellenleiter 1, 2 derart in das Material 10, daß die erwünschte Zentrierung der Längsachsen L1, L2 erfolgt (FIG. 2). Diese Zentrierung ist möglich aufgrund des gewählten Winkels 8, der einen Wert von 60° (Altgrad) besitzt. Dadurch erfolgt die erforderliche gleichmäßige Aufteilung der Kräfte an den zu verformenden Stellen des Materials 10.

Eine anschließend vorzunehmende mechanisch zuverlässige Verbindung von Oberteil 3 und Unterteil 4 ist auf vielfäl-

...

tige Weise möglich, z.B. durch Kleben und/oder Löten und/oder durch eine entsprechende konstruktive Ausbildung, z.B. einen Schnappverschluß. Weiterhin ist es zweckmäßig, das Oberteil 3 und/oder das Unterteil 4 als Zugentlastung für die gekoppelten Lichtwellenleiter 1, 2 auszubilden, z.B. durch eine entsprechende Verklebung der Lichtwellenleiter mit dem Oberteil 3 und/oder dem Unterteil 4.

Die Erfindung ist nicht auf das beschriebene Ausführungsbeispiel beschränkt, sondern sinngemäß auf weitere anwendbar. Beispielsweise sind mehrere parallel zueinander verlaufende Vertiefungen in dem Unterteil möglich, so daß, bei entsprechend geformtem Oberteil, gleichzeitig mehrere Paare von Lichtwellenleitern gleichzeitig koppelbar sind. Die Wahl der Materialien sowie der Abmessungen, insbesondere derjenigen des Oberteils und des Unterteils, sind abhängig von der gewünschten Einsatzart der Koppelanordnung. Es ist einem Fachmann geläufig, daß beispielsweise für einen Einsatz unter extremen klimatischen Bedingungen andere Materialien benötigt werden als bei einem normalen Raumklima (20°C, 60 % relativer Feuchte).

. . .

0171664

Licentia Patent-Verwaltungs-GmbH     PTL-UL/Ja/lh
Theodor-Stern-Kai 1                   UL 84/84
D-6000 Frankfurt 70


Patentansprüche


1. Koppelanordnung für Lichtwellenleiter, bei der jeweils zwei Lichtwellenleiter mit ihren Stirnflächen zueinander gekoppelt und in einer grabenförmigen Vertiefung befestigt sind, dadurch gekennzeichnet,

- daß eine im wesentlichen starre Halterung vorhanden ist, die aus einem Oberteil (3) und einem Unterteil (4) besteht,

- daß in dem Unterteil (4) mindestens eine grabenförmige Vertiefung (5) vorhanden ist, deren Tiefe (6) im wesentlichen dem 1,5-fachen Außendurchmesser der zu koppelnden Lichtwellenleiter (1, 2) entspricht und deren Seitenwände (7) einen im wesentlichen gleichschenkligen v-förmigen Querschnitt bilden und einen Winkel (8) von im wesentlichen 60° einschließen,

- daß an dem Oberteil (3) eine im wesentlichen ebene

...

Oberfläche (9) vorhanden ist, welche dem Unterteil (4) zugewandt ist, und

- daß die Seitenwände (7) sowie die Oberfläche (9) mit einem beim Zusammenfügen der Lichtwellenleiter (1, 2) verformbarem Material (10) beschichtet sind mit einer Schichtdicke, die mindestens der Differenz der Außendurchmesser der zu koppelnden Lichtwellenleiter (1, 2) entspricht.

2. Koppelanordnung nach Anspruch 1, dadurch gekennzeichnet, daß die Vertiefung (5) durch einen Prägevorgang oder durch Stoßen hergestellt ist.

3. Koppelanordnung nach Anspruch 1 oder Anspruch 2, dadurch gekennzeichnet, daß das Material (10) aus einem thermoplastisch verformbaren Kunststoff besteht.

4. Koppelanordnung nach einem der vorhergehenden Ansprüche, dadurch gekennzeichnet, daß das Material (10) das Metall Indium oder ein anderes duktiles Metall enthält.

5. Koppelanordnung nach einem der vorhergehenden Ansprüche, dadurch gekennzeichnet, daß zwischen den Stirnflächen der zu koppelnden Lichtwellenleiter (1, 2) ein optisches Medium vorhanden ist, dessen Brechungsindex angepaßt ist an diejenigen der Lichtwellenleiter (1, 2).

6. Koppelanordnung nach einem der vorhergehenden Ansprüche, dadurch gekennzeichnet, daß Oberteil und Unterteil zusammenfügbar sind durch eine Klebe- und/oder Lötverbindung.

...

7. Koppelanordnung nach einem der vorhergehenden Ansprüche, dadurch gekennzeichnet, daß an dem Oberteil (3) und/oder dem Unterteil (4) eine Vorrichtung zur Zugentlastung der Lichtwellenleiter (1, 2) vorhanden ist.

...

FIG. 1

FIG. 2

0171664

Europäisches
Patentamt

EUROPÄISCHER RECHERCHENBERICHT

Nummer der Anmeldung

EP 85 10 9216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 005 792 (COMPAGNIE LYONNAISE DE TRANSMISSIONS OPTIQUES) <br> * Seite 5, Zeile 17 - Seite 6, Zeile 18; Seite 7, Zeile 32 - Seite 8, Zeile 3; Abbildungen 2,4,8 * | 1-6 | G 02 B 6/38 |
| A | GB-A-1 267 788 (STANDARD TELEPHONES AND CABLES) <br> * Seite 7, Zeile 89 - Seite 2, Zeile 31; Abbildung * | 1,6 | |
| A,D | ELECTRONICS LETTERS, Band 13, Nr. 22, 27. Oktober 1977, Seiten 673-674; A.R. TYNES et al.: "Low-loss splices for single-mode fibres" <br> * Absatz, Splicing Technique * | 1 | |
| D,A | US-A-4 475 790 (R.G. LITTLE) <br> * Zusammenfassung; Abbildungen 4,6 * | 1,2 | RECHERCHIERTE SACHGEBIETE (Int Cl 4) <br><br> G 02 B |
| A | EP-A-0 015 657 (AMP INC.) <br> * Seite 6, Zeilen 27-32 * | 7 | |
| A | EP-A-0 009 117 (SIEMENS AG) | | |

Der vorliegende Recherchenbericht wurde für alle Patentansprüche erstellt.

| Recherchenort <br> DEN HAAG | Abschlußdatum der Recherche <br> 07-11-1985 | Prüfer <br> MORRELL D.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82